# EUROPÄISCHE PATENTSCHRIFT

(11) **EP 0 428 226 B1**
(45) Veröffentlichungstag und Bekanntmachung des Hinweises auf die Patenterteilung: **04.09.1996**
(21) Anmeldenummer: 90202997.4
(22) Anmeldetag: 13.11.1990
(51) Int. Cl.: H04L 27/22

(54) **Empfänger mit direkter Quadratur-Abtastung des Eingangssignals**
Receiver with direct quadrature sampling of the input signal
Recépteur à échantillonage directe en quadrature du signal d'entrée

(30) Priorität: 16.11.1989 DE 3938126
(43) Veröffentlichungstag der Anmeldung: 22.05.1991
(73) Patentinhaber: Philips Patentverwaltung GmbH, 22335 Hamburg (DE); Philips Electronics N.V., 5621 BA Eindhoven (NL)
(72) Erfinder: Rosenkranz, Werner, Dr.-Ing., W-8520 Erlangen (DE)
(74) Vertreter: Peuckert, Hermann, Dipl.-Ing.

(56) Entgegenhaltungen:
- EP-A- 0 350 999
- US-A- 4 079 329
- US-A- 4 412 302

## Beschreibung

Die Erfindung betrifft einen Empfänger gemäß den Oberbegriff des Anspruchs 1.

In dem Artikel "Quadrature Sampling of FM-Bandpass Signals - Implementation and Error Analysis", Rosenkranz W., Proc. of Int. Conf. on Digital Signal Processing, Florenz, 1987, Seiten 377 bis 381, ist die Abtastung von frequenzmodulierten Bandpaßsignalen beschrieben, bei denen Real- und Imaginärteil der komplexen Einhüllenden, die sogenannten Quadraturkomponenten, direkt durch Abtastung der modulierten Bandpaßsignale mit einer Trägerfrequenz f_{c} gewonnen werden. Hierzu wird ein Analog/Digital-Umsetzer mit periodisch wiederkehrenden Abtastimpulsen einer Frequenz f_{q}, im folgenden als Taktfrequenz f_{q} bezeichnet, gesteuert.

Die Taktfrequenz f_{q} muß hierbei so gewählt sein, daß ein Abtastintervall Tₐ zur Abtastung der Normalkomponente, d.h. des Realteils des Bandpaßsignals, genau einer halben Wellenlänge der Trägerfrequenz bzw. einem ganzzahligen Vielfachen dieses Zeitintervalls entspricht. Bei ungeradzahligen Vielfachen ist hierbei jedoch bei jedem zweiten Abtastwert das Vorzeichen umzukehren. Zur Abtastung der zu den auf diese Weise gewonnenen Abtastwerten der Normalkomponenente in Quadratur stehenden Abtastwerte der Quadraturkomponente muß das Eingangssignal zu Zeitpunkten abgetastet werden, die zu den Abtastzeitpunkten der Normalkomponenten einen zeitlichen Versatz von ein Viertel der Wellenlänge des Trägersignals bzw. einem Viertel der Wellenlänge und einem ganzzahligen Vielfachen der halben Wellenlänge des Trägersignals einhalten. Auch hier ist wiederum bei ungeradzahligen Vielfachen bei jedem zweiten Abtastwert das Vorzeichen umzukehren. Auf diese Weise erhält man Wertepaare entsprechend einer Abtastfrequenz fₐ = 1/Tₐ, die dem Real- und Imaginärteil der komplexen Einhüllenden entsprechen.

Bei einer in dem eingangs erwähnten Aufsatz beschriebenen Schaltungsanordnung wird nur ein einziger Analog/Digital-Umsetzer benötigt. Die Taktfrequenz f_{Q} ist so gewählt, daß das Taktintervall T_{q} = 1/f_{q}einem Viertel der Wellenlänge und einem ganzzahligen Vielfachen der halben Wellenlänge der Trägerfrequenz entspricht. Hierdurch sind wechselweise beide vorstehend genannten Bedingungen eingehalten worden, wodurch jeder Abtastwert abwechselnd der Normalkomponente und der Quadraturkomponente entspricht. Durch Interpolation mittels eines Filters wird der zeitliche Versatz von paarweise erhaltenen I- und Q-Komponenten beseitigt, so daß am Ausgang des Filters Werte erhalten werden, die einer gleichzeitigen Abtastung von I- und Q-Komponente entsprechen. Das Verhältnis von Trägerfrequenz f_{c} und halber Abtastfrequenz fₐ/2 ist damit ganzzahlig und kann nicht beliebig gewählt werden.

Eine weitere Bedingung ist, daß die Abtastfrequenz fₐ mindestens gleich der Bandbreite B des abzutastenden Bandpaßsignals ist.

Bei Bandpaßsignalen, deren Signalinhalt aus einer Folge von Binärwerten abgeleitet ist, denen eine Bittaktfrequenz f_{b} zugrundeliegt, ist es vorteilhaft, wenn die Abtastfrequenz fₐ gleich der Bittaktfrequenz f_{b} gewählt wird.

Bei Übertragungssystemen, bei denen beispielsweise diese Bittaktfrequenz f_{b} vorgegeben ist, ist man auf diese Weise in der Wahl der Trägerfrequenz f_{c} durch die beschriebenen Vorgaben bei den bekannten Anordnungen stark eingeschränkt.

Aufgabe der Erfindung ist es, daß bei einem gattungsgemäßen Empfänger eine größere Auswahlmöglichkeit aus den zur Wahl stehenden Trägerfrequenzen geschaffen wird.

Diese Aufgabe wird durch einen Empfänger mit den im Anspruch 1 angegebenen Merkmalen gelöst.

Mittels des wählbaren Gruppenabstands kann die Länge eines Abtastintervalls Tₐ, die dem Abstand zwischen einem ersten Abtastzeitpunkt einer Gruppe und einem ersten Abtastzeitpunkt der nachfolgenden Gruppe (Gruppenlänge) entspricht, beliebig gewählt werden. Dies bietet den Vorteil, daß durch die entsprechende Wahl des Gruppenabstandes Abtastintervall und Trägerfrequenz einander angepaßt werden können. Durch äquidistante Abtastzeitpunkte innerhalb der Gruppe von Abtastzeitpunkten werden weiterhin Normalkomponente und Quadraturkomponente in bekannter Weise erhalten. Bei entsprechender Wahl der Gruppenabstände entsteht zwischen sich einander entsprechenden Abtastwerten von aufeinanderfolgenden Gruppen gegebenenfalls eine Phasendrehung. Diese Phasendrehung kann durch Nachbearbeitung der Abtastwerte beseitigt werden.

Ist der Gruppenabstand so gewählt, daß er einem Vielfachen eines Viertels der Wellenlänge des Trägersignals entspricht, so entspricht besagte Phasendrehung einem Vielfachen von 90°. Dies hat den Vorteil, daß die Nachbearbeitung auf eine Invertierung der Abtastwerte und gegebenenfalls auf eine Vertauschung der Abtastwerte reduziert wird. Da Invertierungen und Vertauschungen relativ einfach auszuführen sind, ist bei dieser Ausführungsform die Nachbearbeitung mit nur geringem Aufwand verbunden.

Durch einen von Gruppe zu Gruppe unterschiedlich gewählten Gruppenabstand, können sogar diese Vertauschungen und gegebenenfalls auch die Invertierungen entfallen. In einem anderen Anwendungsfall können durch die unterschiedlich gewählten Gruppenabstände Abtastwerte erhalten werden, die von Gruppe zu Gruppe um einen bestimmten Phasenwinkel rotieren. Wie in einem Ausführungsbeispiel noch näher dargelegt wird, läßt sich auf diese Weise unter Umständen die spätere Signalverarbeitung der empfangenen Signale vereinfachen.

Die Erfindung wird nun im folgenden anhand von in den Zeichnungen dargestellten Ausführungsbeispielen näher beschrieben und erläutert.

Es zeigen:
- Fig. 1: ein Blockschaltbild für einen Empfänger mit direkter Quadratur-Abtastung.
- Fig. 2: Abtastimpulsfolge und diverse Schaltsignal-Zeitdiagramme für achtfache Überabtastung eines Eingangssignals in einem Bitintervall von 158 Grundtakten und periodischer Fortsetzung der Abtastimpulse nach jedem Bitintervall.
- Fig. 3a: Abtastwerte nach Abtastung.
- Fig. 3b: Abtastwerte nach Interpolation.
- Fig. 3c: Abtastwerte nach Mittelung.
- Fig. 4: Abtastimpulse und diverse Schaltsignal-Zeitdiagramme für achtfache Überabtastung eines Eingangssignals in einem Bitintervall von 158 Grundtakten und periodischer Fortsetzung der Abtastimpulse nach 159 bzw. 155 Grundtakten.

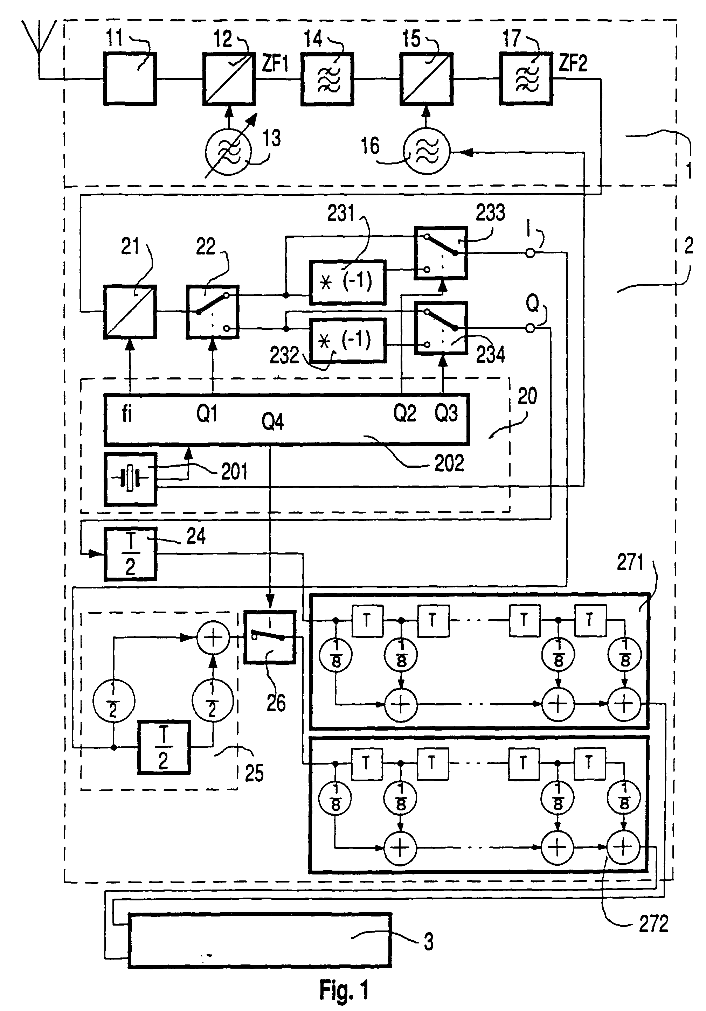

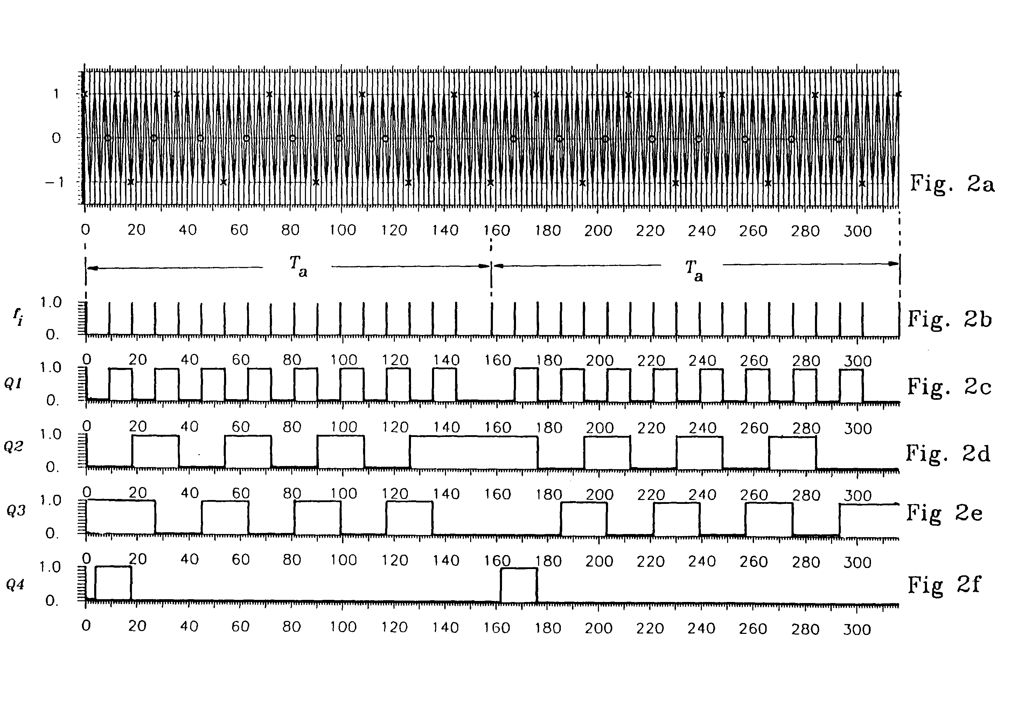

Bei den folgenden Ausführungsbeispielen wird von binärcodierten Signalen, denen eine Bitfrequenz f_{b} = 270,833 KHz (= 13 MHz/48) zugrundeliegt und die auf einen HF-Träger mittels Winkelmodulation aufmoduliert werden, ausgegangen. Fig. 1 zeigt in schematischer Darstellung einen Funkempfänger, welcher aus einem HF-Teil 1, einem Quadraturteil 2 und einer Anordnung zur digitalen Signalverarbeitung 3 besteht.

Im HF-Teil 1 wird ein empfangenes Signal frequenzselektiert und auf eine Trägerfrequenz umgesetzt. Hierzu wird das von einer HF-Empfangsstufe 11 empfangene Signal mittels eines ersten ZF-Mischers 12, welchem von einem ersten ZF-Oszillator 13 eine erste variable ZF-Mischfrequenz f_{zf1} zugeführt ist, auf eine erste Zwischenfrequenz ZF1 heruntergemischt. Das auf diese erste Zwischenfrequenz heruntergemischte Eingangssignal wird in einem ersten ZF-Verstärker 14 bandpaßgefiltert und verstärkt und einem zweiten ZF-Mischer 15 zugeführt, in welchem mittels einer von einem zweiten ZF-Oszillator 16 zugeführten zweiten Zwischenfrequenz das Eingangssignal auf eine zweite Zwischenfrequenz ZF2 herabgemischt wird. In einem zweiten ZF-Verstärker 17 wird diese zweite Zwischenfrequenz ZF2 wiederum bandpaßgefiltert und verstärkt.

Die zweite Zwischenfrequenz ZF2 ist im Quadraturteil 2 einem Analog/Digital-Umsetzer 21 zugeführt. Dieser Analog/Digital-Umsetzer 21 wird von einem zentralen Taktgeber 20 mittels Taktimpulsen fᵢ gesteuert. Bei diesem Ausführungsbeispiel wurde die zweite Zwischenfrequenz f_{ZF2} so gewählt, daß sie einem ganzzahligen Vielfachen der halben Bittaktfrequenz f_{b} entspricht. Als ganzzahliges Verhältnis von zweiter Oszillatorfrequenz f_{ZF2} und halben Bittakt f_{b} wurde der Wert 79 gewählt. Hieraus ergibt sich eine zweite Zwischenfrequenz von 10,6979166 MHz, welche den Vorteil bietet, daß sich diese Zwischenfrequenz nur sehr gering von der im Rundfunkbereich verwendeten Zwischenfrequenz von 10,7 MHz unterscheidet. Dies bietet den Vorteil, daß für diese gewählte Zwischenfrequenz f_{ZF2} handelsübliche Filter eingesetzt werden können.

In einer zentralen Taktsteuerung 20 ist ein Taktgeber 201 angeordnet, welcher einen Grundtakt von einem Viertel der Wellenlänge der zweiten Zwischenfrequenz f_{ZF2} erzeugt. Abweichungen vom vorgesehenen Frequenzverhältnis zwischen zweiter Zwischenfrequenz ZF2 und dem Grundtakt wirken sich wie eine Frequenzverstimmung aus. Bei entsprechend ausgelegter nachgeschalteter Signalverarbeitung können solche Frequenzverstimmungen, die klein sind zur Bandbreite des Signals, toleriert werden. Günstiger ist es aber, solche Frequenzverstimmungen von vornherein auszuschließen. Besonders vorteilhaft ist es, auch die Mischfrequenz des zweiten ZF-Oszillators 16 aus dem Taktgeber 201 abzuleiten. Dadurch kann das Frequenzverhältnis von zweiter Zwischenfrequenz ZF2 und Grundtakt unabhängig von äußeren Einflüssen starr festgelegt werden.

In diesem Ausführungsbeispiel entsprechen 158 Grundtakte genau einem Bittakt der Bitfrequenz f_{b}. Dieser Grundtakt ist einem Zählwerk 202 zugeführt. Dieses Zählwerk 202 erzeugt bei jedem neunten Grundtakt den Abtastimpuls fᵢ. Hierdurch liegen zwei benachbarte Abtastwerte genau 2 Wellenlängen der zweiten Zwischenfrequenz ZF2 auseinander. Insgesamt erzeugt das Zählwerk innerhalb eines Bittaktes genau siebzehn solcher äquidistant aufeinanderfolgender Abtastimpulse. Diese siebzehn aufeinanderfolgenden Abtastwerte bilden somit eine Gruppe von äquidistanten Abtastwerten. Ein beim 153. Grundtakt eventuell möglicher Abtastimpuls wird unterdrückt, so daß in jedem Bittakt auf diese Weise genau neun Abtastwerte für die Normalkomponente und acht Abtastwerte für die Quadraturkomponente erhalten werden. Nach jeweils 158 Grundtakten wird das Zählwerk zurückgestellt und mit der Takterzeugung der Abtastimpulse fᵢ wird wie vorstehend beschrieben wieder neu begonnen. Auf diese Weise setzt sich die Abfolge der erzeugten Abtastimpulse fᵢ nach jedem 158. Grundtakt periodisch fort.

Zwischen dem letzten Abtastwert einer Gruppe von Abtastwerten und dem ersten Abtastwert einer folgenden Gruppe von Abtastwerten liegen genau 14 Grundtakte. Die Gruppen folgen somit in einem Abstand von jeweils 14 Grundtakten aufeinander. In diesem Ausführungsbeispiel ist der Gruppenabstand größer gewählt als der Abstand zweier aufeinanderfolgender Abtastwerte innerhalb einer Gruppe. Einen entsprechend schnellen Analog/Digital-Umsetzer vorausgesetzt kann der Gruppenabstand jedoch auch kleiner als der Abstand zweier aufeinanderfolgender Abtastwerte einer Gruppe gewählt sein.

Die technische Realisierung von Zählwerken ist dem Fachmann auf dem Gebiet der Digital-Elektronik geläufig. Eine der möglichen Realisierungen eines solchen Zählwerks kann beispielsweise dem Kapitel 10.7 "Systematischer Entwirrung von Schaltwerken" des Buches "Halbleiterschaltungstechnik", U. Tietze, Ch. Schenk, Springer Verlag Berlin, 8. Auflage, Seite 259 bis Seite 268 entnommen werden. Im folgenden wird daher auf die technische Realisierung des Zählwerks 201 nicht näher eingegangen. Stattdessen werden in noch im einzelnen näher erläuterten Figuren Zeit-Spannungsdiagramme für die einzelnen Schaltsignalausgänge des Zählwerks 201 angegeben, um das Zählwerk 201 zu beschreiben.

In Fig. 2a ist eine unmodulierte Trägerschwingung f_{c} dargestellt, wobei im unteren Teil der Fig. 2a eine Zeitachse aufgetragen ist, bei der jeder Grundtakt durch einen Strich der Zeitachse dargestellt ist. In Fig. 2b sind die vom Zählwerk 201 erzeugten Abtastimpulse fᵢ, beginnend beim Grundtakt 0, dargestellt. Deutlich ist die Lücke zwischen dem auf den 144. Grundtakt des ersten Bittakts entfallenden siebzehnten Abtastimpuls und den nächsten auf den ersten Grundtakt des nächsten Bittakts (= 158. Grundtakt) fallenden Abtastimpuls fᵢ zu sehen. Da, wie bereits beschrieben, der zeitliche Abstand der Abtastimpulse fᵢ so gewählt ist, daß dieser Abstand genau 2 Wellenlängen der zweiten Zwischenfrequenz ZF2 entspricht, erhält man durch diese Abtastimpulse abwechselnd Abtastwerte der Normal- und der Quadraturkomponente. Die abwechselnd aufeinanderfolgenden Abtastwerte einer Bittaktperiode der Normal- und der Quadraturkomponenten werden durch einen in der Zeichnung symbolisch als Umschalter dargestellten Komponentenverteiler 22 wechselweise einem ersten Signalzweig zur Verarbeitung der Normalkomponente und einem zweiten Signalzweig zur Verarbeitung der Quadraturkomponente zugeordnet. Ein entsprechendes Schaltsignal Q1 zur Steuerung des Komponentenverteilers 22 wird ebenfalls von dem Zählwerk 202 drzeugt. Der Komponentenverteiler 22 ist so aufgebaut, daß er bei einem niedrigen Spannungspegel (Low-Signal) an einem Schalteingang der gerade an einem Eingang anliegende Abtastwert dem ersten Signalzweig für die Bearbeitung der Normalkomponente zuführt und bei einem Schaltsignal mit hohem Spannungspegel (High-Signal) den gerade anliegenden Abtastwert dem zweiten Verarbeitungszweig zur Verarbeitung der Quadraturkomponenten weiterleitet. Der Spannungspegelverlauf des den Komponentenverteiler 22 steuernden Schaltsignals Q1 ist in Fig. 2c dargestellt. Deutlich ist zu sehen, daß das Schaltsignal Q1, beginnend beim 0. Grundtakt, mit Low-Pegel wechselweise alle neun Grundtakte seinen Spannungspegel von Low auf High und umgekehrt wechselt. Mit Beginn des nächsten Bittaktes, im Ausführungsbeispiel und in der Fig. 2a dem Grundtakt Nummer 158, entspricht der Signalverlauf des Schaltsignals Q1 dem im vorherigen Bittakt.

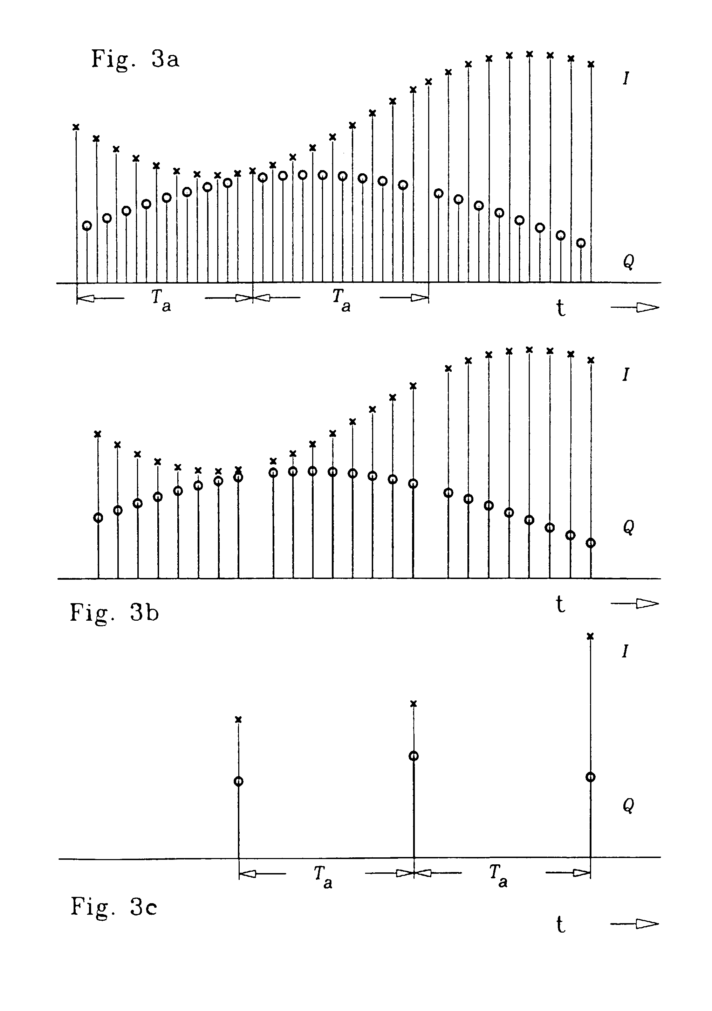

Da der Abstand zwischen zwei Abtastwerten der Normalkomponente bzw. Abtastwerten der Quadraturkomponente auf diese Weise einem ungradzahligen Vielfachen der halben Wellenlänge der zweiten Zwischenfrequenz f_{zf2} entsprechen, muß jeder zweite Abtastwert der Normalkomponente und jeder zweite Abtastwert der Quadraturkomponente invertiert werden. Hierzu ist in jedem Signalzweig jeweils ein Vorzeicheninvertierer 231, 232 und ein Umschalter 233, 234 vorgesehen. Diese Umschalter 233, 234 sind so aufgebaut, daß bei einem Low-Pegel an ihrem Schalteingang die Abtastwerte des jeweiligen Verarbeitungszweiges direkt durchgeschaltet werden, während bei einem High-Pegel an ihren Schalteingängen die Abtastwerte der Vorzeicheninvertierer 231, 232 weitergegeben werden. Der Verlauf eines zweiten Schaltsignals Q2, welches den ersten Umschalter 233 steuert, ist in Fig. 2d und der Verlust eines dritten Schaltsignals Q3, das den Schaltzustand des zweiten Umschalters 234 steuert, ist in Fig. 2e wiedergegeben. Die ebenfalls von dem Zählwerk 202 erzeugten zweiten und dritten Schaltsignale Q2, Q3 sind so gewählt, daß wechselweise in jedem Signalzweig jeweils der Abtastwert bzw. bei jedem zweiten Abtastwert der invertierte Abtastwert weitergeleitet wird. In Fig. 3a sind die nach der Vorzeichenumkehr erhaltenen Abtastwerte eines modulierten Signals symbolisch dargestellt, wobei die Normalkomponenten an ihrer Spitze ein x und die Quadraturkomponenten an ihrer Spitze ein o tragen. Obwohl Normal- und Quadraturkomponente in getrennten Signalzweigen verarbeitet werden, sind sie in der Fig. 3 stets zusammen dargestellt, um ihre zeitliche Zuordnung zueinander zu verdeutlichen. Aus der Fig. 3a ist ersichtlich, daß ein Abtastwert der Quadraturkomponente zeitlich gesteuert jeweils in der Mitte zwischen zwei Abtastwerten der Normalkomponente liegt.

In einem Interpolator 25 wird die Normalkomponente gefiltert. Da die zur Interpolation herangezogenen Abtastwerte äquidistant und eng benachbart sind, vereinfacht sich dadurch der Aufbau des Interpolators und das Interpolationsergebnis wird verbessert. Im Ausführungsbeispiel wird ein linearer Interpolator verwendet, welcher jeweils aus zwei aufeinanderfolgenden Abtastwerten einen Interpolationswert bildet.

Im Interpolator 25 wird jeweils der letzte Abtastwert in einem Register zwischengespeichert. Der zwischengespeicherte Abtastwert und der gerade am Eingang anliegende Abtastwert werden halbiert, beispielsweise durch eine Verschiebung des Bitmusters um eine Stelle nach links, und dann addiert. Der auf diese Weise interpolierte Wert entspricht in guter Näherung einem Abtastwert, den man in der Mitte zwischen den zwei letzten dem Interpolator zugeführten Abtastwerten erhalten hätte. Auf diese Weise ist der interpolierte Abtastwert der Normalkomponente und der Abtastwert der Quadraturkomponente, der zeitlich zwischen den beiden letzten, dem Interpolator 25 zugeführten Abtastwerten der Normalkomponente jeweils abgetastet wurde, als zeitgleich abgetastet zu betrachten.

Da das Ergebnis des Interpolators 25 immer nur nach Bearbeitung der letzten beiden zugeführten Abtastwerte erhalten wird, muß, um die Zeitgleichheit zwischen interpoliertem Abtastwert und zugehöriger Quadraturkomponente bei der weiteren Bearbeitung zu erzielen, der zugehörige Abtastwert der Quadraturkomponente durch ein Verzögerungsglied 24 zeitlich verzögert werden. Diese zeitliche Verzögerung entspricht genau dem Abstand zwischen zwei regulär aufeinanderfolgenden Abtastimpulsen fᵢ, im Ausführungsbeispiel also 9 Grundtakten. Durch die Interpolation werden aus den neun Abtastwerten der Normalkomponente eines Bittakts acht interpolierte Abtastwerte gebildet (siehe Fig. 3b). Durch einen von einem vierten Steuerungssignal Q4 gesteuerten Ausschalter 26 wird verhindert, daß ein nach dem neunten Abtastwert gebildeter interpolierter Wert weitergeleitet wird (siehe Signalverlauf des Schaltsignals Q4 in Fig. 2e). Wegen der Verzögerung der Ausgangswerte des Interpolators durch die Interpolation wird das Schaltsignal Q4 um eben diese Verzögerung zeitlich verzögert erzeugt.

Fig. 3b zeigt, wie aus den neun Abtastwerten der Normalkomponente acht interpolierte Abtastwerte der Normalkomponente erhalten werden.

Die acht interpolierten Abtastwerte der Normalkomponente und die acht Abtastwerte der Quadraturkomponente sind jeweils für sich einem Mittelungsfilter 271, 272 zugeführt. In den Filtern 271, 272 wird aus den jeweiligen acht Abtastwerten jeweils ein einziger Wert für die Normalkomponente bzw. die Quadraturkomponente gebildet. Durch die achtfache Überabtastung wird auf diese Weise das Quantisierungsrauschen des Analog/Digital-Umsetzers um neun dB verringert. Auf diese Weise erhält man für jeden Bittakt jeweils genau einen Wert für die Normalkomponente und die Quadraturkomponente. Durch den äquidistanten Abstand der acht Abtastwerte vereinfacht sich auch der Aufbau des Mittelungsfilters. Im Ausführungsbeispiel werden die jeweils mit einem Faktor von 1/8 multiplizierten Abtastwerte eines Bittakts aufsummiert, um den Mittelwert der jeweiligen Normal- bzw. Quadraturkomponente eines Bittakts zu erhalten.

Fig. 3c zeigt, wie aus jeweils acht Abtastwerten ein einziger gemittelter Abtastwert, jeweils zum Ende eines Bittakts, erzeugt wird.

Wenn die Anzahl der auf einen Bittakt entfallenden Grundtakte eine ohne Rest durch vier teilbare Zahl ist, dann ist das Ergebnis der Mittelung aufeinanderfolgender Bittakte vorzeichenrichtig und die auf vorstehende Weise gewonnenen Quadraturkomponenten können ohne Überarbeitung zur digitalen Signalbearbeitung weitergereicht werden. Verbleibt jedoch, wie im vorliegenden Fall, beim Dividieren der Grundtakte pro Bittakt ein Rest von zwei, so müssen die auf vorstehende Weise gewonnenen Quadraturkomponenten für jeden zweiten Bittakt invertiert werden. Dies kann aber in vorteilhafter Weise auch dadurch realisiert werden, daß das Zählwerk 201 in jedem zweiten Bittakt die Steuersignale zum Umschalten der Umschalter 231, 232 um 180 Grad phasenverschoben erzeugt (siehe insbesondere den Verlauf der Schaltsignale Q2, Q3 während der Grundtakte 158 bis 15), so daß in jedem zweiten Bitintervall jeder Abtastwert, der nicht invertiert wurde, nunmehr invertiert wird, und jeder Abtastwert, der im ersten Bitintervall invertiert wurde, nunmehr nicht invertiert wird. Auf diese Weise setzen sich die Schaltsignale Q2 und Q3 erst nach jedem zweiten Bitintervall periodisch fort, während die Schaltsignale Q1 und Q4 sich jeweils nach jedem Bitintervall periodisch fortsetzen.

Ist die Anzahl der Abtastimpulse pro Bittakt so gewählt, daß die Zahl der Abtastimpulse dividiert durch vier einen Rest von eins ergibt, so rotieren die Quadraturkomponenten von Bittakt zu Bittakt um jeweils 90 Grad. Der Abtastwert der Normalkomponente I wird im zweiten Bittakt zur Quadraturkomponente Q, im dritten Bittakt zur invertierten Normalkomponente -I und im vierten Bittakt zur invertierten Quadraturkomponente -Q. Das Gleiche gilt entsprechend für die Quadraturkomponente Q. Ist die Anzahl der Grundtakte pro Bittakt so gewählt, daß sie durch vier geteilt einen Rest von drei ergibt, so eilen die Quadraturkomponenten von Bittakt zu Bittakt um 90 Grad in der Phase nach.

Wenn im Sender eine nichtlineare Winkelmodulation, wie z.B. eine als gaussian minimum shift keying (GMSK) bekannte Modulationsart oder eine als generalized tamed frequenzy modulation (GTFM) bekannte Modulationsart gewählt sind, dann kann durch diesen Rotationseffekt der Aufwand, der zur Signalentzerrung im digitalen Signalverarbeitungsteil 3 zu betreiben ist sogar verringert werden. Bei solchen Modulationsarten braucht nicht mehr die komplizierte Struktur einer nichtlinearen Winkelmodulation berücksichtigt zu werden, sondern die Entzerrung kann sich darauf beschränken, als sei beim Senden eine lineare Amplitudenmodulation verwendet worden. Zur Entzerrung und Demodulation sind im digitalen Signalverarbeitungsteil 3 dadurch nur noch reelle Zahlenwerte zu verarbeiten.

Im folgenden wird kurz ein Ausführungsbeispiel für eine solche Rotation der Quadraturkomponenten beschrieben. Ausgehend von der gleichen Bitfrequenz f_{b} = 270,833 KHz wird die Anzahl der Grundtakte pro Bitintervall Tₐ zu 159 gewählt. Bei dieser Zahl bleibt bei der Division durch vier ein Rest von drei, wodurch die Bedingung für die Rotation erfüllt ist. Als zweite Zwischenfrequenz ZF2 ergibt sich somit 159*(f_{b}/4) = 10,76562 MHz, also eine Frequenz, die immer noch nahe an 10,7 MHz liegt. Unter Beibehaltung der Abstände der Abtastimpulse fi werden von dem Zählwerk 201 die gleichen Schaltsignale Q1, Q2, Q3 und Q4 erzeugt, wobei lediglich nach jedem 158. Grundtakt ein zusätzlicher 159. Grundtakt pro Bitintervall eingefügt wird, bei dem alle Schaltsignale Q1, Q2, Q3 den gleichen Signalzustand beibehalten wie im vorhergegangenen Grundtakt 158. Wegen der Rotation bleiben die Schaltsignale in den aufeinanderfolgenden Bitintervallen gleich und wiederholen sich periodisch nach jedem Bitintervall Tₐ.

Werden für die Signalverarbeitung dennoch die phasenrichtigen Quadraturkomponenten benötigt, so kann bei einer Ausführungsform, bei der die Anzahl der Grundtakte pro Bitintervall dividiert durch vier einen ungeraden Rest ergibt, durch ein bittaktweises Vertauschen bzw. und/oder Invertieren der Komponenten diese Rotation rückgängig gemacht werden. Dies kann beispielsweise durch eine Nachbearbeitung der Quadraturkomponenten erfolgen, indem die Quadraturkomponenten einem nicht dargestellten Vertauschungsschalter zugeführt sind, welcher in jedem zweiten Bitintervall Tₐ Normalkomponente und Quadraturkomponente miteinander vertauscht. Die noch benötigten Invertierungen können schon durch entsprechende Ansteuerung der Umschalter 233, 234 vorgenommen werden.

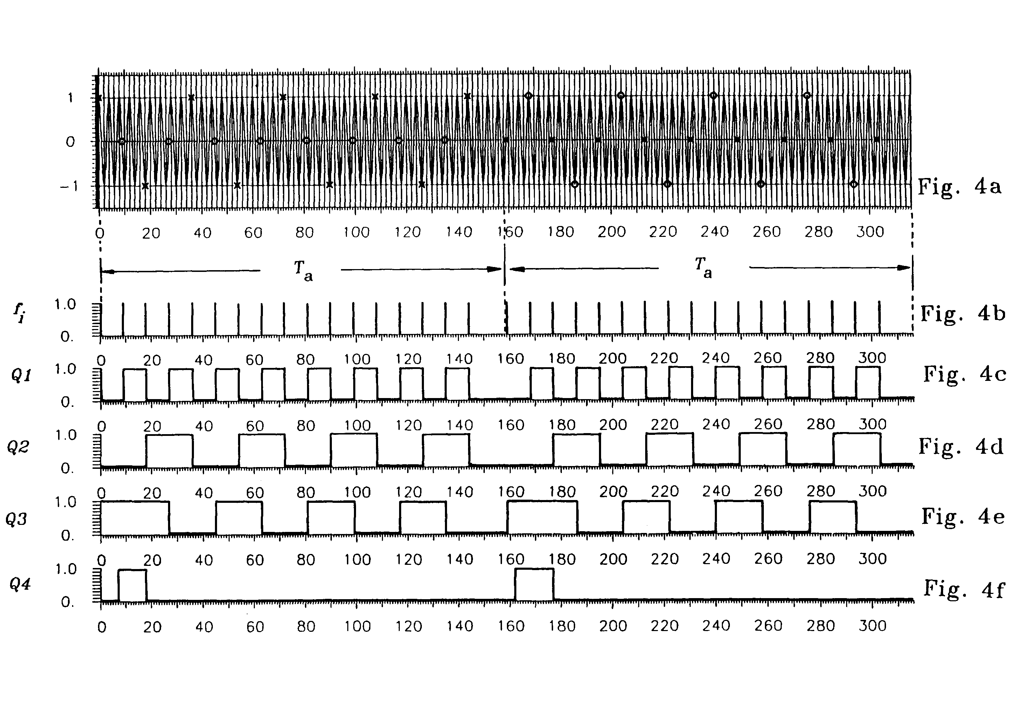

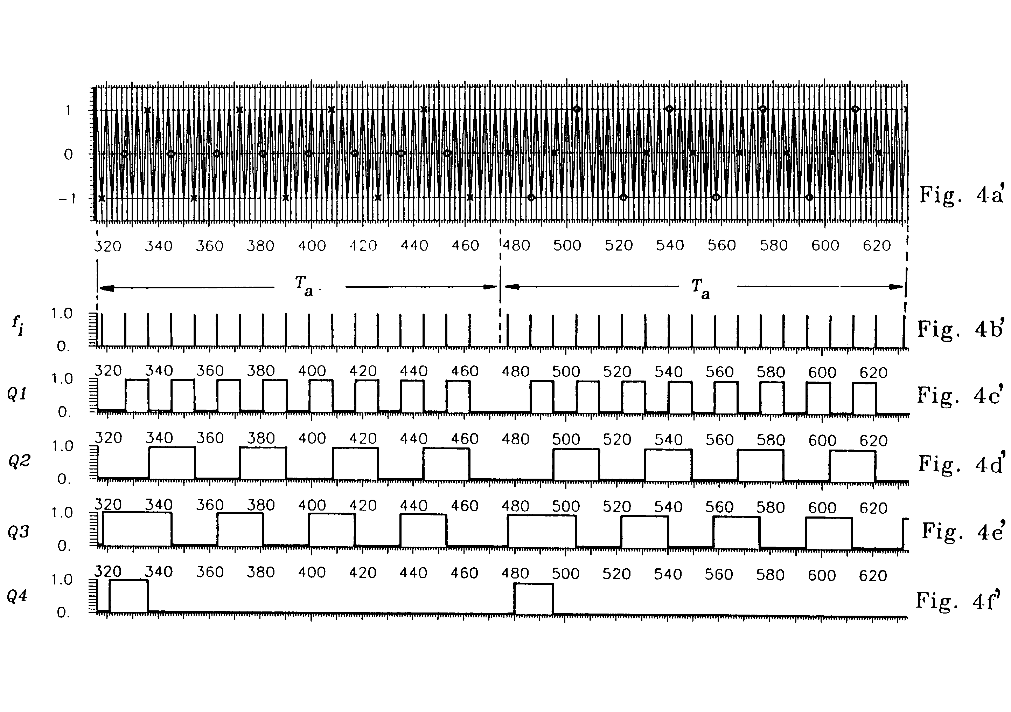

In einem weiteren, in Fig. 4 dargestellten, Ausführungsbeispiel ist wiederum, wie im ersten Ausführungsbeispiel, die zweite Zwischenfrequenz ZF2 so gewählt, daß ein Bitintervall 158 Grundtakten entspricht. Dargestellt sind die zeitliche Lage der Abtastimpulse und Schaltsignale für vier aufeinanderfolgende Bitintervalle. Die Abtastimpulse fᵢ und Schaltsignale des ersten Bitintervalls (= Grundtakt 0 bis 158 in Fig. 4) entsprechen den Abtastimpulsen und Schaltsignalen während des ersten Bitintervalls im ersten Ausführungsbeispiel. Die periodische Fortsetzung der Abtastimpulse und der zugehörigen Schaltsignale wird jedoch in diesem Ausführungsbeispiel in drei aufeinanderfolgenden Bitintervallen um jeweils einen Grundtakt verzögert und in einem darauffolgenden vierten Bitintervall um drei Grundtakte verkürzt. Hierdurch ist der erste Abtastimpuls des zweiten Bitintervalls (= Grundtakte 158 bis 316 in Fig. 4) nicht wie in den vorangegangenen Ausführungsbeispielen auf den ersten, sondern auf den zweiten Grundtakt des zweiten Bitintervalls (= Grundtakt 159 in Fig. 4b) gelegt. Aus Fig. 4a ist ersichtlich, daß hierdurch gegenüber dem ersten Ausführungsbeispiel (siehe Fig. 2a) um eine Viertelperiode der Trägerfrequenz später abgetastet wird. Hierdurch wird bei der Abtastung mit dem ersten Abtastimpuls im zweiten Bitintervall die invertierte Quadraturkomponente erhalten. Der zweite Abtastwert im zweiten Bitintervall ergibt einen Abtastwert für die Normalkomponente. Entsprechendes gilt für die anderen Abtastwerte des zweiten Bitintervalls.

Im dritten Bitintervall (= Grundtakt 316 bis 474 in Fig. 4b′) werden wiederum die Abtastimpulsfolge und die zugehörigen Schaltsignale um einen Grundtakt verzögert fortgesetzt. Der erste Abtastimpuls des dritten Bitintervalls fällt somit auf den dritten Grundtakt des dritten Bitintervalls (= Grundtakt 318 in Fig. 4b′). In diesem Fall ergibt sich aus der Fig. 4a′, daß der erste Abtastwert des dritten Abtastintervalls der invertierten Normalkomponente und der zweite Abtastwert des dritten Abtastintervalls einem Abtastwert der Quadraturkomponente entsprechen. Ebenso wird die periodische Folge der Abtastimpulse auch im vierten Bitintervall (= Grundtakt 474 bis 632) wieder um einen Grundtakt verzögert fortgesetzt. Der erste Abtastimpuls des vierten Abtastintervalls entspricht somit dem Grundtakt 477. Der durch den ersten Abtastimpuls im vierten Bitintervall erhaltene Abtastwert entspricht somit dem Abtastwert einer Quadraturkomponente und der zweite Abtastwert des vierten Bitintervalls einem invertierten Abtastwert der Quadraturkomponente.

In den ersten drei Bitintervallen ist die periodische Fortsetzung der Abtastimpulse und der Schaltsignale Q1, Q2, Q3 um jeweils einen Grundtakt länger als die Anzahl der Grundtakte pro Intervall, beträgt also in diesem Ausführungsbeispiel dreimal hintereinander jeweils 159 Grundtakte. Der zeitliche Abstand zwischen dem ersten Abtastwert des vierten Bitintervalls und dem ersten Abtastwert des nächsten Bitintervalls ist bei diesem Ausführungsbeispiel hingegen um drei Grundtakte verkürzt und beträgt demgemäß nur 155 Grundtakte. Auf diese Weise liegt der erste Abtastwert des fünften Bitintervalls beim Grundtakt 632. Der Abstand zwischen dem ersten Abtastimpuls des ersten Bitintervalls und des ersten Abtastimpulses des fünften Bitintervalls entspricht auf diese Weise genau vier Bitintervallen (= 632 = das Vierfache von 158 Grundtakten). Auf diese Weise erhält man durch den ersten Abtastimpuls des fünften Bitintervalls wieder einen Abtastwert der Normalkomponente. Der Verlauf der Abtastimpulse und der Signalverlauf des fünften Abtastintervalls entspricht nunmehr wieder dem ersten Abtastintervall.

Durch die beschriebene Abfolge der Abtastimpulse sind die Abtastimpulse in aufeinanderfolgenden Bitintervallen Tₐ jeweils um eine Viertelperiode der zweiten Zwischenfrequenz ZF2 verschoben. Dadurch werden jedem der beiden Zweige abwechselnd Abtastwerte der I- und Q-Komponenten zugeführt. I- und Q Komponenten werden abwechselnd interpoliert. Nach jeweils vier Bitintervallen findet durch eine um drei Grundtakte verkürzte Aufeinanderfolge der Abtastimpulse ein Taktausgleich statt, so daß im Mittel die Anzahl der Grundtakte pro Bitintervall und die Anzahl von Ausgangswerten der Quadratur-Signalerzeugung im Vergleich zum ersten Ausführungsbeispiel gleich sind.

Dieses Ausführungsbeispiel bietet den Vorteil, daß der Verlauf der Schaltsignale Q1, Q2, Q3 in allen vier Bitintervallen gleich bleibt. Dies vereinfacht den Aufbau des Zählwerks. Das Zählwerk wird jeweils dreimal hintereinander nach 159 Grundtakten zurückgesetzt und nach diesen drei längeren Grundtakten einmal bereits nach 155 Grundtakten zurückgesetzt.

Auf diese Weise können auch bei Bitintervallen, deren Anzahl der Grundtakte pro Bitintervall eine gerade Zahl ist, von Bitintervall zu Bitintervall rotierende Abtastwerte erhalten werden. Sinngemäß läßt sich diese Ausführungsform auch auf Ausführungen übertragen, bei denen die Anzahl der Grundtakte pro Bitintervall eine ungerade Zahl ist, und der dadurch auftretende Rotationseffekt der Abtastwerte rückgängig gemacht werden soll.

## Patentansprüche

1. Empfänger (1, 2, 3), insbesondere Funkempfänger mit Mitteln (20, 21, 22, 231..234) zur Gewinnung einer Normalkomponente (I) und einer Quadraturkomponente (Q) eines auf ein Trägersignal aufmodulierten Signals durch Abtastung des Trägersignals, wobei zur Bestimmung des Zeitpunkts der Abtastung eine Folge von Abtastzeitpunkten vorgesehen ist,
dadurch gekennzeichnet,
daß der Empfänger (1, 2, 3) Mittel (24, 25, 26, 271, 272) zur Zusammenfassung einer Anzahl von äquidistanten Abtastzeitpunkten jeweils zu einer Gruppe aufweist, wobei zur Vorgabe des Gruppenabstands zwischen dem letzten Abtastzeitpunkt einer ersten Gruppe und dem ersten Abtastzeitpunkt einer folgenden Gruppe eine Zeitspanne vorgesehen ist, die gegenüber dem zeitlichen Abstand zweier aufeinanderfolgender Abtastzeitpunkte einer Gruppe veränderbar ist.

2. Empfänger nach Anspruch 1,
dadurch gekennzeichnet,
daß der Empfänger (1, 2, 3) zur Vorgabe eines von Gruppe zu Gruppe unterschiedlichen Gruppenabstands vorgesehen ist.

3. Empfänger nach einem der Ansprüch 1 oder 2,
dadurch gekennzeichnet,
daß die Mittel (20, 21, 22, 231..234) vorgesehen sind, den Gruppenabstand entsprechend einem Vielfachen eines Viertels der Wellenlänge des Trägersignals zu wählen.

4. Empfänger nach einem der Ansprüche 1 bis 3,
dadurch gekennzeichnet,
daß der Empfänger (1, 2, 3) Mittel (20, 21, 22, 231..234) aufweist, die Gruppenlänge zwischen einem ersten Abtastzeitpunkt einer Gruppe und einem ersten Abtastzeitpunkt der nachfolgenden Gruppe gleich oder einem ganzzahligen Vielfachen der Bittaktrate eines digitalen Signals zu wählen, das dem aufmodulierten Signal zugrundeliegt,

5. Empfänger nach einem der Ansprüche 1 bis 4,
dadurch gekennzeichnet,
daß der Empfänger (1, 2, 3) zur Erzeugung von die Abtastzeitpunkte festgelegenden Abtastimpulsen ein Zählwerk (202) aufweist.

6. Empfänger nach einem der Ansprüche 1 bis 5,
dadurch gekennzeichnet,
daß der Empfänger (1, 2, 3) einen Komponentenverteiler (22) aufweist, der in Abhängigkeit eines Schaltsignals (Q1) die zu den einzelnen Abtastzeitpunkten gewonnenen Abtastwerte einem Signalzweig zur Verarbeitung der Normalkomponente (I) und einem Signalzweig zur Verarbeitung der Quadraturkomponente (Q) zuteilt.

7. Empfänger nach einem der Ansprüche 1 bis 6,
dadurch gekennzeichnet,
daß mindestens ein Vorzeicheninvertierer (231) vorgesehen ist, welchem die Abtastwerte zugeführt sind, und daß ein Umschalter (233) vorgesehen ist, dessen ersten Eingang der Abtastwert und dessen zweiten Eingang der durch den Vorzeicheninvertierer (231) invertierte Abtastwert zugeführt sind.

8. Empfänger nach einem der Ansprüche 1 bis 7,
dadurch gekennzeichnet,
daß der Empfänger (1, 2, 3) in mindestens einem der beiden Signalzweige einen Interpolator (25) aufweist.

9. Empfänger nach einem der Ansprüche 1 bis 8,
dadurch gekennzeichnet,
daß der Empfänger (1, 2, 3) in den beiden Signalzweigen Mittelungsfilter (271, 272) aufweist.

10. Empfänger nach einem der Ansprüche 1 bis 9,
dadurch gekennzeichnet,
daß der Empfänger (1, 2, 3) einen einzigen Oszillator zur Ableitung der Abtastzeitpunkte und einer zur Gewinnung der Trägerfrequenz vorgesehenen Mischfrequenz aufweist.

## Claims

1. Receiver (1, 2, 3), more particularly radio receiver with means (20, 21, 22, 231, .., 234) for generating a normal component (I) and a quadrature component (Q) of a signal modulated on a carrier signal by a sampling of the carrier signal, a sequence of sampling instants being determined for the sampling instant, characterized in that the receiver (1, 2, 3) comprises means (24, 25, 26, 271, 272) for combining a number of equidistant sampling instants into groups while a period of time is chosen for predefining the group distance between the last sampling instant of a first group and the first sampling instant of a next group and this period of time is variable compared with the distance in time of two successive sampling instants of a group.

2. Receiver (1, 2, 3) as claimed in Claim 1, characterized in that the receiver (1, 2, 3) predefines a group distance that is variable from one group to the next.

3. Receiver as claimed in Claim 1 or 2, characterized in that the means (20, 21, 22, 231, .., 234) select the intergroup distance in accordance with a multiple of a quarter of the wavelength of the carrier signal.

4. Receiver as claimed in one of the Claims 1 to 3, characterized in that the receiver (1, 2, 3) comprises means (20, 21, 22, 231, ... 234) for selecting the group length between a first sampling instant of a group and a first sampling instant of the next group to be equal to or an integral multiple of the bit clock rate of a digital signal which signal is used as a basis of the signal modulated on a carrier.

5. Receiver as claimed in one of the Claims 1 to 4, characterized in that the receiver (1, 2, 3) comprises a counter (202) for generating sampling pulses which determine the sampling instants.

6. Receiver as claimed in one of the Claims 1 to 5, characterized in that the receiver (1, 2, 3) comprises a component distributor (22) which, in response to a switching signal (Q1), assigns the sample values obtained at the individual sampling instants to a signal branch for processing the normal component (I) and a signal branch for processing the quadrature component (Q).

7. Receiver as claimed in one of the Claims 1 to 6, characterized in that at least one sign inverter (231) is provided to which the sample values are applied and in that a change-over switch (233) is provided to whose first input is applied the sample value and to whose second input is applied the sample value inverted by the sign inverter (231).

8. Receiver as claimed in one of the Claims 1 to 7, characterized in that the receiver (1, 2, 3) comprises an interpolator (25) in at least either signal branch.

9. Receiver as claimed in one of the Claims 1 to 8, characterized in that the receiver (1, 2, 3) has averaging filters (271, 272) in both signal branches (271, 272).

10. Receiver as claimed in one of the Claims 1 to 9, characterized in that the receiver (1, 2, 3) comprises a single oscillator for deriving the sampling instants and has a mixing frequency for producing the carrier frequency.

## Revendications

1. Récepteur (1, 2, 3), en particulier récepteur radio, avec des moyens (20, 21, 22, 231...234) pour l'obtention d'une composante normale (I) et d'une composante de quadrature (Q) d'un signal modulé sur un signal porteur par échantillonnage du signal porteur, une séquence de temps d'échantillonnage étant prévue pour la détermination du moment de l'échantillonnage, caractérisé en ce que le récepteur (1, 2, 3) présente des moyens (24, 25, 26, 271, 272) pour rassembler un nombre de moments d'échantillonnage équidistants respectivement en un groupe, une période de temps qui peut varier par rapport à l'écart temporel de deux moments d'échantillonnage successifs d'un groupe étant prévue pour prédéterminer l'écart des groupes entre le dernier moment d'échantillonnage d'un premier groupe et le premier moment d'échantillonnage d'un groupe suivant.

2. Récepteur selon la revendication 1, caractérisé en ce que le récepteur (1, 2, 3) est prévu pour déterminer un écartement des groupes variant d'un groupe à l'autre.

3. Récepteur selon l'une des revendications 1 ou 2, caractérisé en ce que des moyens (20, 21, 22, 231...234) sont prévus pour sélectionner l'écartement des groupes en fonction d'un multiple d'un quart de la longueur d'onde du signal porteur.

4. Récepteur selon l'une des revendications 1 à 3, caractérisé en ce que le récepteur (1, 2, 3) présente des moyens (20, 21, 22, 231 ,...234) pour sélectionner la longueur du groupe entre un premier moment d'échantillonnage d'un groupe et un premier moment d'échantillonnage du groupe suivant comme un nombre égal ou un multiple entier de la vitesse du rythme binaire d'un signal numérique qui est à la base du signal modulé.

5. Récepteur selon l'une des revendications 1 à 4, caractérisé en ce que le récepteur (1, 2, 3) présente un compteur pour la production des impulsions d'échantillonnage déterminant les moments d'échantillonnage.

6. Récepteur selon l'une des revendications 1 à 5, caractérisé en ce que le récepteur (1, 2, 3) présente un distributeur de composantes (22) qui, en fonction d'un signal de commutation (Q1) affecte les valeurs d'échantillonnage obtenues aux moments d'échantillonnage individuels en une branche de signal pour le traitement de la composante normale (I) et en une branche de signal pour le traitement de la composante en quadrature (Q).

7. Récepteur selon l'une des revendications 1 à 6, caractérisé en ce qu'il est prévu au moins un inverseur de signe (231) auquel sont amenées les valeurs d'échantillonnage et en ce qu'il est prévu un commutateur (233) à la première entrée duquel est amenée la valeur d'échantillonnage et à la deuxième entrée duquel est amenée la valeur d'échantillonnage inversée par l'inverseur de signe (231).

8. Récepteur selon l'une des revendications 1 à 7, caractérisé en ce que le récepteur (1, 2, 3) présente un interpolateur (25) dans au moins une des deux branches du signal.

9. Récepteur selon l'une des revendications 1 à 8, caractérisé en ce que le récepteur (1, 2, 3) présente des filtres (271, 272) de calcul de moyenne dans les deux branches du signal.

10. Récepteur selon l'une des revendications 1 à 9, caractérisé en ce que le récepteur (1, 2, 3) présente un oscillateur unique pour la branche des moments d'échantillonnage et une fréquence mixte pour l'obtention de la fréquence porteuse.
